# FASCICULE DE BREVET EUROPEEN

(11) **EP 3 652 652 B1**
(45) Date de publication et mention de la délivrance du brevet: **25.08.2021**
(21) Numéro de dépôt: 18735335.4
(22) Date de dépôt: 09.07.2018
(51) Int. Cl.: G06F 13/42, H04L 29/08

(54) **SYSTÈME ET PROCÉDÉ DE COMMUNICATION POUR LA COMMANDE ET LE CONTRÔLE D'AU MOINS UN PÉRIPHÉRIQUE**
SYSTEM UND KOMMUNIKATIONSVERFAHREN ZUR ÜBERWACHUNG UND STEUERUNG MINDESTENS EINES PERIPHERIEGERÄTES
SYSTEM AND COMMUNICATION METHOD FOR MONITORING AND CONTROL OF AT LEAST ONE PERIPHERAL

(30) Priorité: 12.07.2017 FR 1756613
(43) Date de publication de la demande: 20.05.2020
(73) Titulaire: Safran Electronics & Defense, 92100 Boulogne-Billancourt (FR)
(72) Inventeur: TOILLON, Patrice, 92100 Boulogne Billancourt (FR); AUPHAN, Albert, 92100 Boulogne Billancourt (FR); WENDLING, Martin, 92100 Boulogne Billancourt (FR)
(74) Mandataire: Cabinet Le Guen Maillet
(86) Numéro de dépôt international: PCT/EP2018/068496
(87) Numéro de publication internationale: WO 2019/011836

(56) Documents cités:
- EP-A1- 2 320 603
- FR-A1- 2 982 443
- US-A1- 2003 115 369

## Description

La présente invention concerne un procédé et un système de communication pour la commande et le contrôle d'au moins un périphérique dans un aéronef. Classiquement, l'électronique de commande et de contrôle d'un périphérique tel que, par exemple, un commutateur de puissance, un convertisseur statique, un actionneur, un moteur électrique par exemple utilisé dans un système de freinage d'un aéronef, est située à proximité du périphérique.

Cette proximité entre l'électronique de commande et de contrôle et le périphérique permet de garantir une bonne réception des signaux de commande et de contrôle, d'éviter tout problème lié à d'éventuels temps de propagation des signaux ou à d'éventuelles pertes de synchronisation entre des dispositifs distincts, distants ou non.

Il existe aujourd'hui un besoin de centraliser l'électronique de commande et de contrôle des périphériques qui minimise les pertes de synchronisation et qui soit robuste envers une éventuelle perte de synchronisation entre l'électronique de commande et de contrôle et l'électronique placée à proximité des périphériques. Les réseaux de communication existants ne sont pas adaptés aux impératifs liés par exemple au temps de réaction nécessaire à un contrôle et une commande optimale de certains périphériques.

Il est donc nécessaire aujourd'hui de fournir un système de communication qui permette une centralisation de l'électronique de commande de périphériques et qui soit adapté aux contraintes temps réel pour la commande et le contrôle des périphériques.

US2003115369 décrit un protocole de transmission, pour un système temps-réel, comportant des emplacements temporels dédiés pour les différents esclaves présents sur le bus. FR2982443 décrit un procédé de gestion d'un dispositif de bus maître / esclaves comportant une information de quantité de données à transmettre. US2011103268 décrit un système de communication avionique comportant une redondance de bus.

A cette fin, selon un premier aspect, l'invention propose un système de communication pour la commande et le contrôle d'au moins un périphérique dans un aéronef, tel que défini dans les revendications 1 et 10.

Ainsi, le système de communication selon la présente invention permet une centralisation de l'électronique de commande de périphériques et est adapté aux contraintes de synchronisation entre le module de communication maître et le ou chaque module de communication esclave, au temps réel pour la commande et le contrôle d'un ou plusieurs périphériques.

En utilisant la valeur du compteur comprise dans chaque trame de données transmise par le module de communication maître pour mettre à jour la valeur d'un compteur compris dans le ou chaque module de communication esclave, le ou chaque module de communication esclave peut rester synchronisé avec le module de communication maître.

De plus la présente invention facilite la gestion coordonnée de périphériques distincts, distants ou non avec une maîtrise de la cohérence temporelle dans la commande d'une pluralité de périphériques.

La présente invention limite l'électronique déportée à proximité d'un périphérique, et par conséquent son volume dans la zone où est situé le ou chaque périphérique, qui est parfois soumise à des contraintes environnementales fortes, telles que par exemple des contraintes mécaniques et/ou thermiques. La présente invention permet de concentrer une partie de l'électronique dans une zone où les contraintes environnementales sont moindres et qui est plus accessible.

Des modes particuliers de l'invention sont définis dans les revendications dépendantes 2 à 9.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. la représente un premier exemple d'architecture d'un système de communication pour la commande et le contrôle de périphériques selon la présente invention ;
la Fig. 1b représente un second exemple d'architecture d'un système de communication pour la commande et le contrôle de périphériques selon la présente invention ;
la Fig. 2a représente un premier exemple d'architecture d'un module de communication maître du système de communication pour la commande et le contrôle de périphériques selon la présente invention ;
la Fig. 2b représente un second exemple d'architecture d'un module de communication maître du système de communication pour la commande et le contrôle de périphériques selon la présente invention ;
la Fig. 3 représente un exemple d'architecture d'un module de communication esclave du système de communication pour la commande et le contrôle de périphériques selon la présente invention ;
la Fig. 4a représente un premier exemple de chronogramme de la transmission de trames par le module de communication maître et des modules de communication esclaves ;
la Fig. 4b représente un second exemple de chronogramme de la transmission de trames de données par le module de communication maître et des modules de communication esclaves ;
la Fig. 5 représente un exemple d'algorithme exécuté par le module de communication maître pour la transmission de trames de données selon la présente invention ;
la Fig. 6 représente un exemple d'algorithme exécuté par chaque module de communication esclave pour la réception de trames de données selon la présente invention ;
la Fig. 7 représente un exemple d'algorithme exécuté par chaque module de communication esclave pour la transmission de trames de données selon la présente invention ;
la Fig. 8 représente un exemple d'algorithme exécuté par le module de communication maître pour la réception de trames de données selon la présente invention.

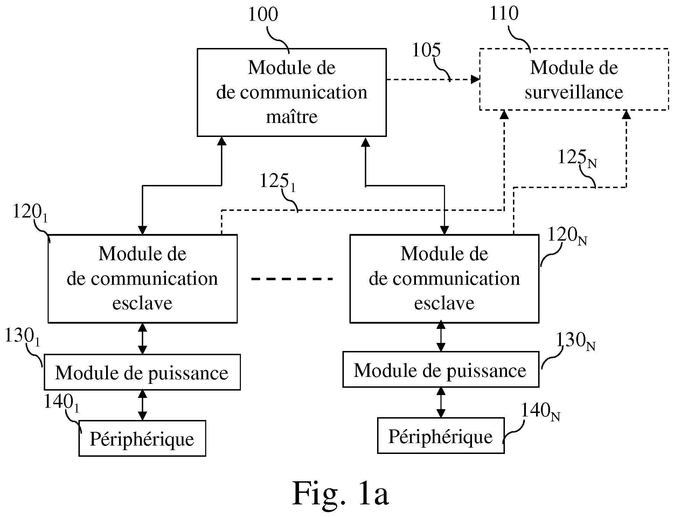

La **Fig. 1a** représente un premier exemple d'architecture d'un système de communication pour la commande et le contrôle de périphériques selon la présente invention.

Le système de communication selon la présente invention comporte un module de communication maître 100 qui est relié à au moins un module de communication esclave. Dans l'exemple de la Fig. 1a, le module de communication maître 100 est relié à une pluralité de modules de communication esclaves 120₁ à 120_{N} où N est supérieur à 2.

Chaque module de communication 120₁ à 120_{N} est relié à un port du module de communication maître par une liaison bidirectionnelle. La liaison bidirectionnelle et le port sont différents de chaque port et de chaque liaison bidirectionnelle reliant chaque autre module de communication esclave au module de communication maître 100.

Les liaisons bidirectionnelles sont par exemple des câbles Ethernet 100 Base T conformes au standard ARINC 664 P2 et ont par exemple une longueur de l'ordre de 10 à 20 mètres.

Chaque module de communication esclave 120₁ à 120_{N} est relié respectivement à un module de puissance 130₁ à 130_{N} lui-même connecté à un périphérique à contrôler 140₁ à 140_{N}.

Chaque module de communication esclave 120₁ à 120_{N} est placé à proximité du module de puissance et du périphérique 140₁ à 140_{N} qu'il contrôle et commande.

Lorsque le module de communication maître 100 transmet une trame de données, celle-ci est transmise à chaque module de communication esclave 120₁ à 120_{N}.

Le système de communication comporte éventuellement un module de surveillance 110.

Le module de surveillance 110 reçoit et mémorise et peut contrôler chaque trame de données transmise par le module de communication maître 100 et les modules de communication esclaves 120₁ à 120_{N}.

Par exemple, les données sont utilisées ultérieurement pour des opérations de maintenance, d'analyse à postériori ou des contrôles temps réel.

Selon un mode particulier, le module de surveillance 110 reçoit, du module de communication maître 100, les trames de données transmises par le module de communication maître 100 et les modules de communication esclaves 120₁ à 120_{N} par l'intermédiaire d'une ou plusieurs liaisons notées 105.

Selon un autre mode particulier, le module de surveillance 110 reçoit les trames de données transmises par le module de communication maître 100 aux modules de communication esclaves par l'intermédiaire de la liaison 105 et reçoit les trames de données transmises par les modules de communication esclaves 120₁ à 120_{N} respectivement par l'intermédiaire des liaisons 125₁ à 125_{N}.

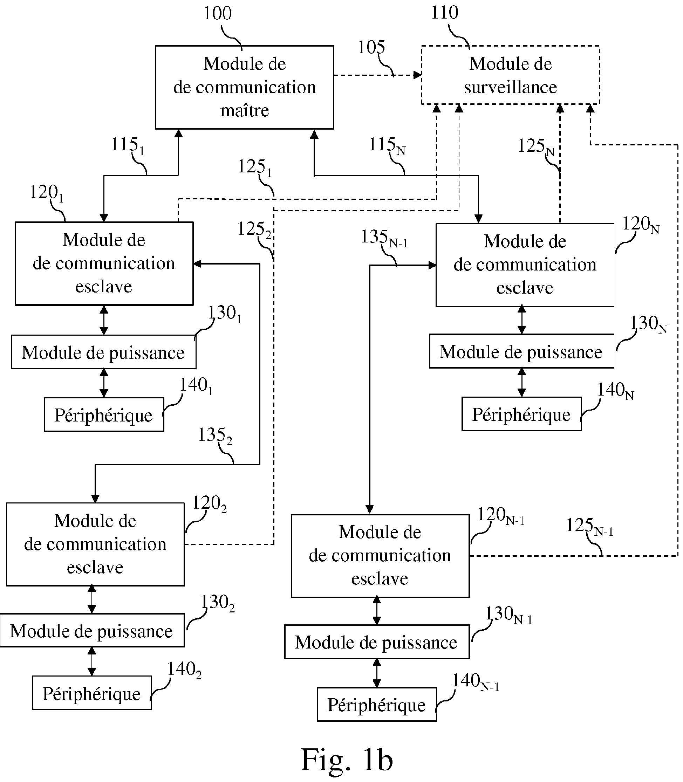

La **Fig. 1b** représente un second exemple d'architecture d'un système de communication pour la commande et le contrôle de périphériques selon la présente invention.

Le système de communication selon la présente invention comporte un module de communication maître 100 qui est relié à au moins un module de communication esclave. Dans l'exemple de la Fig. 1b, le module de communication maître 100 est relié à une pluralité de modules de communication esclaves 120₁, à 120_{N}.

Selon le second exemple, au moins trois modules de communication esclaves sont reliés au module de communication maître et au moins un module de communication esclave est relié au module de communication maître via un autre module de communication esclave.

Le module de communication esclave 120₁ est relié au module de communication maître 100 par la liaison bidirectionnelle 115₁ et le module de communication esclave 120_{N} est relié au module de communication maître 100 par la liaison bidirectionnelle 115_{N}.

Le module de communication esclave 120₂ est relié au module de communication maître 100 par la liaison bidirectionnelle 135₂, via le module de communication esclave 120₁ et la liaison bidirectionnelle 115₁.

Le module de communication esclave 120_{N-1} est relié au module de communication maître 100 par la liaison bidirectionnelle 135_{N-1}, via le module de communication esclave 120_{N} et la liaison bidirectionnelle 115_{N}.

Les liaisons bidirectionnelles sont par exemple des câbles Ethernet 100 Base T conformes au standard ARINC 664 P2 et ont par exemple une longueur de l'ordre de 10 à 20 mètres.

Chaque module de communication esclave 120₁, 120₂ ... 120_{N-1}, 120_{N} est relié respectivement à un module de puissance 130₁, 130₂ ... 130_{N-1}, 130_{N} lui-même connecté à un périphérique à contrôler 140₁, 140₂ ... 140_{N-1}, 140_{N}.

Chaque module de communication esclave 120₁, 120₂ ... 120_{N-1}, 120_{N} est placé à proximité du module de puissance 130₁, 130₂ ... 130_{N-1}, 130_{N} et du périphérique 140₁, 140₂ ... 140_{N-1}, 140_{N} qu'il contrôle et commande.

Lorsque le module de communication maître 100 transmet une trame de données, celle-ci est diffusée à chaque module de communication esclave 120₁, 120₂ ... 120_{N-1}, 120_{N}.

Le système de communication comporte éventuellement un module de surveillance 110.

Le module de surveillance 110 reçoit et mémorise chaque trame de données transmise par le module de communication maître 100 et les modules de communication esclaves 120₁, 120₂ ... 120_{N-1}, 120_{N}.

Par exemple, les données sont utilisées ultérieurement pour des opérations de maintenance, d'analyse à postériori ou des contrôles temps réel.

Selon un mode particulier, le module de surveillance 110 reçoit du module de communication maître 100 les trames de données transmises par le module de communication maître 100 et les modules de communication esclaves 120₁, 120₂ ... 120_{N-1}, 120_{N} par l'intermédiaire d'une ou plusieurs liaisons notées 105.

Selon un autre mode particulier, le module de surveillance 110 reçoit les trames de données transmises par le module de communication maître 100 aux modules de communication esclaves 120₁, 120₂ ... 120_{N-1}, 120_{N} par l'intermédiaire de la liaison 105, reçoit les trames de données transmises par les modules de communication esclaves 120₁ et 120₂ par l'intermédiaire de la liaison 125₁ et reçoit les trames de données transmises par les modules de communication esclaves 120_{N-1} et 120_{N} par l'intermédiaire de la liaison 125_{N}.

Selon un autre mode particulier, le module de surveillance 110 reçoit du module de communication maître 100 les trames de données transmises par le module de communication maître 100 aux modules de communication esclaves 120₁, 120₂ ... 120_{N-1}, 120_{N} par l'intermédiaire de la liaison 105, reçoit les trames de données transmises par les modules de communication esclaves 120₁, 120₂ ... 120_{N-1}, 120_{N} respectivement par l'intermédiaire des liaisons 125₁, 125₂ ... 125_{N-1}, 125_{N}.

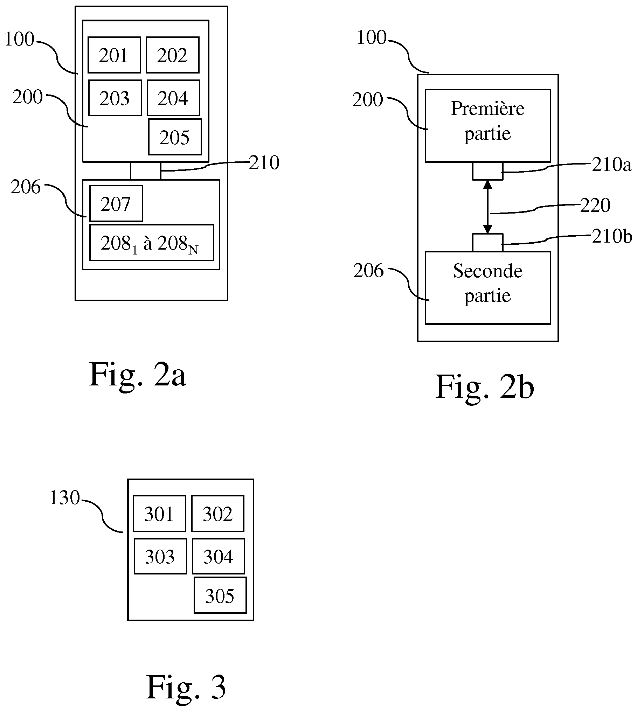

La **Fig. 2a** représente un premier exemple d'architecture d'un module de communication maître du système de communication pour la commande et le contrôle de périphériques selon la présente invention.

Le module de communication maître 100 se décompose en une première partie 200 et une seconde partie 206 reliées par un port interne 210.

La première partie 200 comporte un module de formation 201 des trames de données transmises et de traitement des trames de données reçues, une interface 202 vers des dispositifs distincts, distants ou non émettant les données à transmettre et/ou recevant les données reçues, un module de gestion de liaison 203, qui détermine, à partir d'une table 204, le port et la liaison devant être sélectionnés pour la réception des trames de données des modules de communication esclaves, d'un module de gestion 205 d'un compteur de cycles et d'un compteur de cycles élémentaires.

Pour la transmission de trames de données à destination des modules de communication esclaves 120, la première partie 200 transmet celles-ci selon un rythme prédéterminé dans des périodes temporelles prédéterminées.

Un cycle se décompose en une pluralité de cycles élémentaires, par exemple de durée prédéterminée et identique pour une configuration donnée, connue du module de communication maître 100 et des modules de communication esclaves 120, égale à 8, 10 ou 12 microsecondes.

Dans un cycle élémentaire, une seule trame de données est transmise par la première partie 200.

Un cycle est par exemple composé de 16 cycles élémentaires.

Le compteur de cycles est par exemple un compteur sur 8 ou 12 bits et est incrémenté à chaque cycle.

Le compteur de cycles élémentaires est par exemple un compteur sur 4 bits et est incrémenté toutes les 8, 10 ou 12 microsecondes.

Lors de la transmission d'une trame de données, la valeur du compteur de cycles et la valeur du compteur de cycles élémentaires sont insérées dans la trame de données avec les données à destination d'un module de communication esclave.

La trame de données comporte un identifiant du module de communication esclave destinataire et est transmise à la seconde partie du module de communication maître 100 qui diffuse la trame de données par chacun des ports 208₁ à 208_{N}.

Pour la réception de données transmis par les modules de communication esclaves 120, la première partie 200 du module de communication maître 100 sélectionne l'identifiant d'un module de communication esclave qui correspond à l'indice de la table comportant des indices de période temporelles qui est égal à la valeur du compteur de cycles élémentaires. Chaque indice de période temporelle est associé à un identifiant d'un module de communication esclave.

La première partie 200 commande la seconde partie 206 pour que celle-ci sélectionne le port de la seconde partie du module de communication maître 100 qui est relié au module de communication esclave dont l'identifiant est sélectionné.

La seconde partie 206 comporte un sélecteur 207 qui, sur commande de la première partie 200, dirige une trame de données reçues d'un port 208₁ à 208_{N} vers le port 210.

La seconde partie 206 transmet les trames reçues du port 210 vers chaque port auquel un module de communication esclave 120 est relié.

La **Fig. 2b** représente un second exemple d'architecture d'un module de communication maître du système de communication pour la commande et le contrôle de périphériques selon la présente invention.

Dans le second exemple d'architecture d'un module de communication maître 100, le module de communication maître 100 se décompose en une première partie 200 et une seconde partie 206 reliées par une liaison de type Ethernet 220 et de deux ports 210a et 210b.

Les première et seconde parties du module de communication maître 100 peuvent ainsi être placées à différents endroits de l'aéronef.

Les première et seconde parties 200 et 206 ont une structure interne similaire à celle décrite en référence à la Fig. 2a. à ceci près que, au lieu d'être compris dans la première partie 200, le module de gestion de liaison 203, le module de gestion 205 d'un compteur de cycles et d'un compteur de cycles élémentaires et la table 204 sont compris dans la seconde partie 206.

La **Fig. 3** représente un exemple d'architecture d'un module de communication esclave du système de communication pour la commande et le contrôle de périphériques selon la présente invention.

Le module de communication esclave 120 comporte un module 301 de formation des trames de données à transmettre et de traitement des trames de données reçues, d'une interface 302 vers le module de puissance 130, un module de gestion de liaisons 303, qui détermine, à partir d'une table 304, les périodes temporelles dans lesquelles le module de communication esclave 120 doit transmettre des trames de données, d'un module de gestion 305 d'un compteur de cycles et d'un compteur de cycles élémentaires qui sont mis à jour avec les valeurs des compteurs de cycles et des compteurs de cycles élémentaires comprises dans les trames de données reçues.

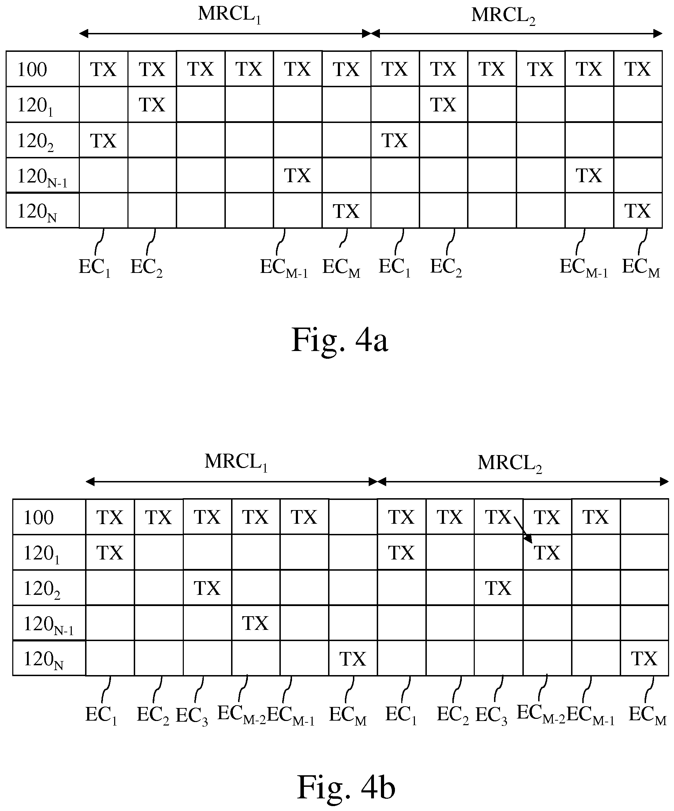

La **Fig. 4a** représente un premier exemple de chronogramme de la transmission de trames par le module de communication maître et des modules de communication esclaves.

La Fig. 4a représente deux cycles de transmission de trames notés MRCL1 et MRCL2 dont la valeur correspond à celle du compteur de cycle. Dans l'exemple de la Fig. 4a, un cycle de transmission est décomposé en M= 6 cycles élémentaires par souci de simplicité. Il est à remarquer ici que le nombre M de cycles élémentaires est bien souvent différent du nombre N de modules de communication esclaves.

Pour chaque cycle élémentaire dans lequel une trame de données doit être transmise par un module de communication esclave 120, la table 204 comporte l'identifiant de l'unique module de communication esclave 120 devant transmettre la trame de données dans le cycle élémentaire.

Les tables 204 et 304 sont par exemple identiques.

En variante, chaque module de communication esclave 120 mémorise une table qui ne comprend, que pour le ou les cycles élémentaires dans lequel le module de communication esclave 120 doit émettre une trame de données ou dans lequel le module de communication esclave 120 qui lui est relié doit émettre une trame de données, l'identifiant du module de communication esclave devant émettre une trame de données.

Selon l'exemple de la Fig. 4a, dans chaque cycle élémentaire EC₁ à EC_{M}, le module de communication maître 100 transmet une trame de données qui est reçue par chaque module de communication esclave 120₁ à 120_{N}.

Dans les cycles élémentaires EC₁ des cycles MRCL₁ et MRCL₂, le module de communication esclave 120₂ transmet une trame de données à destination du module de communication maître 100 conformément à la table 304.

Dans les cycles élémentaires EC₂ des cycles MRCL₁ et MRCL₂, le module de communication esclave 120₁ transmet une trame de données à destination du module de communication maître 100 conformément à la table 304.

Dans les cycles élémentaires EC_{M-1} des cycles MRCL₁ et MRCL₂, le module de communication esclave 120_{N-1} transmet une trame de données à destination du module de communication maître 100 conformément à la table 304.

Dans les cycles élémentaires EC_{M} des cycles MRCL₁ et MRCL₂, le module de communication esclave 120_{N} transmet une trame de données à destination du module de communication maître 100 conformément à la table 304.

La **Fig. 4b** représente un second exemple de chronogramme de la transmission de trames de données par le module de communication maître et des modules de communication esclaves.

La Fig. 4b représente deux cycles de transmission de trames notés MRCL1 et MRCL2 dont la valeur correspond à celle du compteur de cycles. Dans l'exemple de la Fig. 4b, un cycle de transmission est décomposé en M=6 cycles élémentaires par souci de simplicité.

Il est à remarquer ici que le nombre M de cycles élémentaires est bien souvent différent du nombre N de modules de communication esclaves.

Pour chaque cycle élémentaire dans lequel une trame de données doit être transmise par un module de communication esclave 120, la table 204 comporte l'identifiant de l'unique module de communication esclave 120 devant transmettre la trame de données dans le cycle élémentaire.

Les tables 204 et 304 sont par exemple identiques.

En variante, chaque module de communication esclave 120 mémorise une table qui ne comprend, que pour le ou les cycles élémentaires dans lequel le module de communication esclave 120 doit émettre une trame de données ou dans lequel le module de communication esclave 120 qui lui est relié doit émettre une trame de données, l'identifiant du module de communication esclave devant émettre une trame de données.

Dans les cycles élémentaires EC₁ à EC_{M-1}, le module de communication maître 100 transmet une trame de données qui est reçue par chaque module de communication esclave 120₁ à 120_{N}.

Dans l'exemple de la Fig. 4b, le module de communication maître 100 insère dans la trame de données transmise dans le cycle élémentaire EC₃ du cycle MRCL₂, une information identifiant le module de communication esclave 120₁ et identifiant un cycle élémentaire dans lequel le module de communication esclave 120₁ doit transmettre une trame de données et indiquant que le module de communication esclave 120_{N-1} préalablement associé au cycle élémentaire EC_{M-2} du cycle MRCL₂ doit déroger à la table 304 et ne pas transmettre de trame de données dans le cycle élémentaire EC_{M-2} du cycle MRCL₂.

Dans les cycles élémentaires EC₁ des cycles MRCL₁ et MRCL₂, le module de communication esclave 120₁ transmet une trame de données à destination du module de communication maître 100 conformément à la table 304 et dans le cycle élémentaire EC_{M-2} du cycle MRCL₂, le module de communication esclave 120₁ transmet une trame de données à destination du module de communication maître 100 conformément à la trame de données reçue dans le cycle élémentaire EC₃ du cycle MRCL₂.

Dans les cycles élémentaires EC₃ des cycles MRCL₁ et MRCL₂, le module de communication esclave 120₂ transmet une trame de données à destination du module de communication maître 100 conformément à la table 304.

Dans le cycle élémentaire EC_{M-2} du cycle MRCL₁, le module de communication esclave 120_{N-1} transmet une trame de données à destination du module de communication maître 100 conformément à la table 304 et dans le cycle élémentaire EC_{M-2} du cycle MRCL₂, le module de communication esclave 120_{N-1} ne transmet pas de trame de données à destination du module de communication maître 100 conformément à la trame reçue dans le cycle élémentaire EC₃ du cycle MRCL₂.

Dans les cycles élémentaires EC_{M} des cycles MRCL₁ et MRCL₂, le module de communication esclave 120_{N} transmet une trame de données à destination du module de communication maître 100 conformément à la table 304.

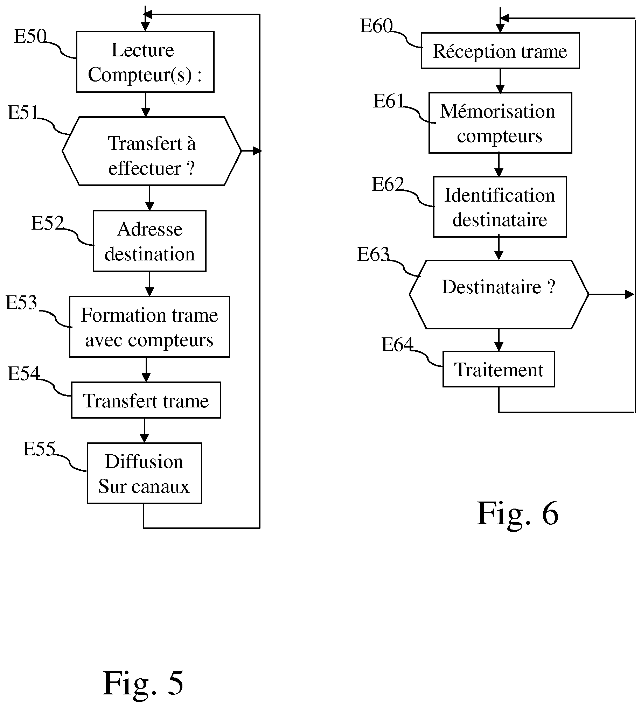

La **Fig. 5** représente un algorithme exécuté par le module de communication maître pour la transmission de trames de données selon la présente invention.

A l'étape E50, la première partie du module de communication maître 100 lit au moins la valeur du compteur de cycles élémentaires et éventuellement la valeur du compteur de cycles.

Le compteur de cycles élémentaires est incrémenté d'une unité à chaque nouvelle période temporelle et le compteur de cycles est incrémenté à chaque fin de cycle.

A l'étape E51, la première partie du module de communication maître 100 vérifie si un transfert de trame de données doit être effectué dans une période temporelle. Périodiquement, par exemple toutes les 8 ou 10 ou 12 microsecondes et dans une période temporelle de même durée, une trame de données peut être transférée par le module de communication maître 100 selon le contenu de la table 204.

Si un transfert de trame de données doit être effectué, la première partie du module de communication maître 100 passe à l'étape E52. Dans la négative, la première partie du module de communication maître 100 retourne à l'étape E50 en attente d'une nouvelle période temporelle.

A l'étape E52, la première partie du module de communication maître 100 obtient une information identifiant le module de communication esclave 120 destinataire de la trame de données à transmettre.

A l'étape E53, la première partie du module de communication maître 100 forme une trame de données comprenant au moins la valeur du compteur de cycles élémentaires, l'identifiant du module de communication esclave 120 destinataire de la trame de données. La trame de données peut comporter en outre des commandes destinées au périphérique relié au module de communication esclave 120 destinataire, la valeur du compteur de cycle.

A l'étape E54, la première partie du module de communication maître 100 transfère la trame de données formée à destination de la seconde partie du module de communication maître 100.

A l'étape E55, la seconde partie du module de communication maître 100 transfère la trame de données à chaque module de communication esclave 120.

La **Fig. 6** représente un algorithme exécuté par chaque module de communication esclave pour la réception de trames de données selon la présente invention.

A l'étape E60, chaque module de communication esclave 120 reçoit une trame de données.

A l'étape E61, chaque module de communication esclave 120 mémorise au moins la valeur du compteur de cycles élémentaires comprise dans la trame et la valeur du compteur de cycles si celle-ci est présente dans la trame de données. Chaque module de communication esclave 120 recale sa référence temporelle de gestion locale des compteurs de cycles élémentaires et cycles à partir de la réception correcte de chaque trame de données issues du module de communication maître 100 de façon à maintenir la synchronisation entre le déroulement des cycles réalisé au niveau du module de communication esclave 120 et le déroulement des cycles réalisé au niveau du module de communication maître 100 et ce grâce à la diffusion de chacune des trames de données effectuée par la seconde partie du module de communication maitre 100.

A l'étape E62, chaque module de communication esclave 120 lit dans la trame de données reçue l'identifiant du module de communication esclave 120.

Si un ou plusieurs modules de communication esclaves sont reliés au module de communication esclave 120, le module de communication esclave 120 transfère systématiquement, à cette même étape, la trame de données au ou aux modules de communication esclaves qui lui sont reliés.

A l'étape E63, chaque module de communication esclave 120 vérifie s'il est destinataire de la trame de données en comparant l'identifiant compris dans la trame de données avec son identifiant.

Si le module de communication esclave 120 a le même identifiant que celui compris dans la trame reçue, le module de communication esclave 120 passe à l'étape E64. Dans la négative, le module de communication esclave 120 retourne à l'étape E60 en attente d'une nouvelle trame de données.

A l'étape E64, le module de communication esclave 120 traite les données de la trame de données s'il a le même identifiant que celui compris dans la trame reçue et transfère des commandes au module de puissance 130.

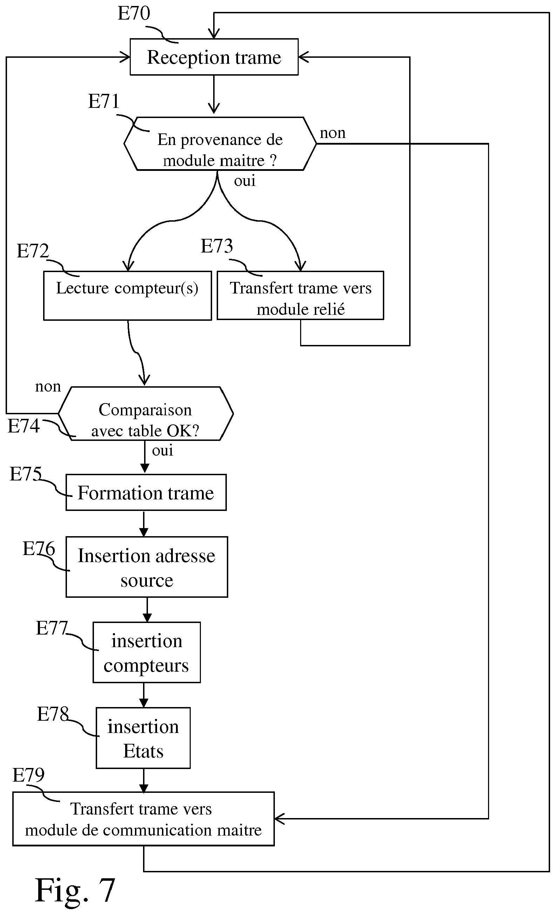

La **Fig. 7** représente un algorithme exécuté par chaque module de communication esclave pour la transmission de trames de données selon la présente invention.

A l'étape E70, chaque module de communication esclave 120 reçoit une trame de données.

A l'étape E71, chaque module de communication esclave 120 détermine l'origine de la trame de données selon le port par lequel la trame de données est reçue.

Si la trame de données est émise par le module de communication maître 100, l'algorithme passe à l'étape E72 ainsi qu'à l'étape E73.

Si la trame de données est émise par un module de communication esclave 120 qui lui est relié, l'algorithme passe à l'étape E79.

A l'étape E72, chaque module de communication esclave 120 lit la valeur du compteur de cycles élémentaires et éventuellement la valeur du compteur de cycles compris dans la trame de données et passe à l'étape E74.

A l'étape E73, chaque module de communication esclave 120 transfère la trame de données reçue à chaque module de communication esclave s'il y en a et retourne à l'étape E70 en attente d'une trame de données.

A l'étape E74, chaque module de communication esclave 120 vérifie si la valeur du compteur lue correspond à un indice de période temporelle associé au module de communication esclave 120.

L'indice de période temporelle est par exemple compris dans une table identique à celle mémorisée par le module de communication maître 100.

Si la valeur du compteur lue correspond à un indice de période temporelle associé au module de communication esclave 120, le module de communication esclave 120 passe à l'étape E75. Dans la négative le module de communication esclave 120 retourne à l'étape E70 en attente d'une trame de données.

A l'étape E75, le module de communication esclave forme une trame de données.

A l'étape E76 facultative, le module de communication esclave 120 insère dans la trame de données son identifiant.

A l'étape E77, le module de communication esclave 120 insère dans la trame de données, la valeur du compteur de cycles élémentaires et éventuellement la valeur du compteur de cycles.

A l'étape E78, le module de communication esclave 120 insère dans la trame de données les données fournies par le périphérique avec par exemple : les mesures de positions, les mesures de courants et de tensions ainsi que les données relatives à l'état du périphérique et les données relatives à l'état du module de communication esclave, comme par exemple des données sur une synthèse de l'état global, sur la température de fonctionnement, le nombre de trames pour lesquelles une vérification de cohérence de cycles a été négative, le nombre de trames pour lesquelles une vérification d'intégrité a été négative

A l'étape E79, le module de communication esclave 120 transfère, au module de communication maître, la trame de données obtenue à l'issue de l'étape E78 ou transfère la trame de données reçue d'un module de communication esclave qui lui est relié.

Cette opération effectuée, le module de communication esclave 120 retourne à l'étape E70.

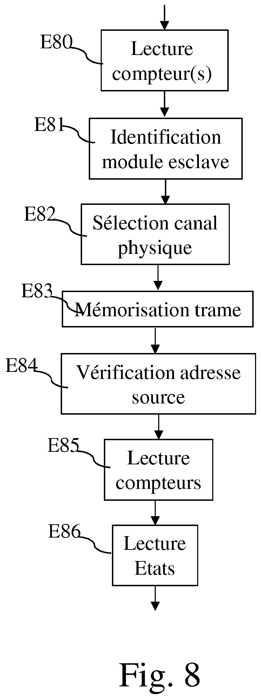

La **Fig. 8** représente un algorithme exécuté par le module de communication maître pour la réception de trames de données selon la présente invention.

A l'étape E80, la première partie du module de communication maître 100 lit la valeur du compteur de cycles élémentaires et éventuellement la valeur du compteur de cycles.

A l'étape E81, la première partie du module de communication maître 100 identifie, à partir de la table 204, le module de communication esclave 120 qui doit émettre une trame de données dans la période temporelle correspondant à la valeur du compteur de cycles élémentaires.

A l'étape E82, la première partie du module de communication maître 100 commande la seconde partie du module de communication maître 100 pour que celui-ci autorise la réception d'une trame de données sur le port auquel le module de communication esclave 120 identifié est relié et en effectue le transfert vers le port 210 ou 210b/210a si la réception de cette trame de données en provenance du module de communication esclave 120 prédéfini pour cette valeur de cycle élémentaire est correcte.

A l'étape E83, la trame de données reçue est mémorisée à un emplacement du module de communication maitre 100 explicitement associé à ce cycle élémentaire.

A l'étape E84, optionnelle, la première partie du module de communication maître 100 vérifie si l'identifiant compris dans la trame de données reçue correspond à celle du module de communication esclave 120 qui doit émettre une trame de données dans la période temporelle.

A l'étape E85, la première partie du module de communication maître 100 lit la valeur du compteur de cycles élémentaires et éventuellement la valeur du compteur de cycles comprise ou comprises dans la trames de données afin de vérifier si celle-ci correspond à celle ou celles lues à l'étape E80.

A l'étape E86, la première partie du module de communication maître 100 lit dans la trame de données des données relatives à l'état du périphérique comme par exemple la synthèse de l'état global, des données sur la température de fonctionnement, le nombre de trames pour lesquelles une vérification de cohérence de cycles a été négative, le nombre de trames pour lesquelles une vérification d'intégrité a été négative.

Cette opération effectuée, la première partie du module de communication maître 100 retourne à l'étape E80 en attente d'une nouvelle période temporelle.

## Revendications

1. Système de communication pour la commande et le contrôle d'au moins un périphérique (140₁ 140_{N}) dans un aéronef, le système comprenant un module de communication maître (100) relié à au moins un module de communication esclave distinct (120₁, 120_{N}), distant ou non du module de communication maître, le ou chaque module de communication esclave étant disposé à proximité d'un périphérique (140₁, 140_{N}) commandé et étant relié à un port du module de communication maître par une liaison bidirectionnelle, **caractérisé en ce que** le système comporte :
- un compteur compris dans le module de communication maître (100),
- une table, comprise dans le module de communication maître (100), la table comportant des indices de périodes temporelles, chaque indice de période temporelle étant associé ou non à un identifiant d'un module de communication esclave,
- des moyens de transmission, compris dans le module de communication maître (100), de trames de données au ou à chaque module de communication esclave dans une pluralité de périodes temporelles, chaque trame de données comportant la valeur du compteur, - des moyens de réception, compris dans le ou chaque module de communication esclave (120₁, 120_{N}), des trames de données,
- des moyens de lecture compris dans le ou chaque module de communication esclave (120₁, 120_{N}), de la valeur du compteur comprise dans la trame de données reçue et de mise à jour d'un compteur compris dans le ou chaque module de communication esclave avec la valeur lue du compteur comprise dans la trame de données reçue,
- des moyens de vérification, compris dans le ou chaque module de communication esclave (120₁, 120_{N}), si la valeur du compteur mise à jour correspond à un indice de période temporelle associé au module de communication esclave,
- des moyens de transfert, compris dans le ou chaque module de communication esclave (120₁, 120_{N}), d'une trame de données au module de communication maître si la valeur du compteur lue et mémorisée correspond à un indice de période temporelle associé au module de communication esclave,
- des moyens de sélection, compris dans le module de communication maître (100), du port reliant le module de communication maître au module de communication esclave dont l'identifiant est associé à l'indice de période temporelle qui correspond à la valeur du compteur,
- des moyens de réception, compris dans le module de communication maître (100), de la trame de données transmise par le module de communication esclave.

2. Système selon la revendication 1, **caractérisé en ce que** le module de communication maître est relié à une pluralité de modules de communication esclaves, le port et la liaison bidirectionnelle reliant chaque module de communication esclave au module de communication maître étant différents du port et de la liaison bidirectionnelle reliant chaque autre module de communication esclave au module de communication maître.

3. Système selon la revendication 1, **caractérisé en ce que** au moins deux modules de communication esclaves sont reliés au module de communication maître et **en ce que** au moins un module de communication esclave est relié au module de communication maître via un autre module de communication esclave et le port et la liaison bidirectionnelle reliant l'autre module de communication esclave au module de communication maître.

4. Système selon la revendication 3, **caractérisé en ce que** l'autre module de communication esclave comporte des moyens de transmission de la trame de données au module de communication esclave qui lui est relié.

5. Système selon l'une quelconque des revendications 1 à 4, **caractérisé en ce que** le système comporte en outre un module de surveillance qui mémorise chaque trame de données transmise par le module de communication maître et par le ou chaque module de communication esclave.

6. Système selon la revendication 5, **caractérisé en ce que** le module de surveillance reçoit chaque trame de données du module de communication maître.

7. Système selon la revendication 5, **caractérisé en ce que** le module de surveillance reçoit du module de communication maître chaque trame de données transmise par le module de communication maître au ou aux modules de communication esclaves et reçoit chaque trame de données transmise par chaque module de communication esclave des modules de communication esclave.

8. Système selon l'une quelconque des revendications 1 à 7, **caractérisé en ce que** le module de communication maître se décompose en deux parties, chaque partie comportant un port les reliant entre elles.

9. Système selon la revendication 8, **caractérisé en ce que** les deux parties sont placées à des endroits différents et les ports sont reliés par une liaison.

10. Procédé de communication pour la commande et le contrôle d'au moins un périphérique dans un aéronef, le système comprenant un module de communication maître relié au ou à chaque module de communication esclave distant ou non du module de communication maître, le ou chaque module de communication esclave étant disposé à proximité d'un périphérique commandé et étant relié à un port du module de communication maître par une liaison bidirectionnelle, **caractérisé en ce que** le procédé comporte les étapes de :
- émission, par le module de communication maître, de trames de données au ou à chaque module de communication esclave dans une pluralité de périodes temporelles, chaque trame de données comportant la valeur d'un compteur compris dans le module de communication maître,
- réception, par le ou chaque module de communication esclave, des trames de données,
- lecture, par le ou chaque module de communication esclave, de la valeur du compteur comprise dans la trame de données reçue, et mise à jour, par le ou chaque module de communication esclave, d'un compteur compris dans le ou chaque module de communication esclave avec la valeur lue du compteur comprise dans la trame de données reçue,
- vérification, par le ou chaque module de communication esclave, si la valeur du compteur mise à jour correspond à un indice de période temporelle associé au module de communication esclave,
- transfert, par le ou chaque module de communication esclave, d'une trame de données au module de communication maître si la valeur du compteur lue et mémorisée correspond à un indice de période temporelle associé au module de communication esclave,
- sélection, par le module de communication maître, à partir d'une table, comprise dans le module de communication maître, comportant des indices de période temporelles, chaque indice de période temporelle étant associé ou non à un identifiant d'un module de communication esclave, du port reliant le module de communication maître au module de communication esclave dont l'identifiant est associé à l'indice de période temporelle qui correspond à la valeur du compteur.

## Patentansprüche

1. Kommunikationssystem zur Steuerung und Kontrolle mindestens eines Peripheriegeräts (140₁, 140_{N}) in einem Luftfahrzeug, wobei das System ein Master-Kommunikationsmodul (100) enthält, das mit mindestens einem getrennten Slave-Kommunikationsmodul (120₁, 120_{N}) verbunden ist, das vom Master-Kommunikationsmodul entfernt ist oder nicht, wobei das oder jedes Slave-Kommunikationsmodul in der Nähe eines gesteuerten Peripheriegeräts (140₁, 140_{N}) angeordnet und mit einem Port des Master-Kommunikationsmoduls über eine bidirektionale Verbindung verbunden ist, **dadurch gekennzeichnet, dass** das System aufweist:
- einen im Master-Kommunikationsmodul (100) enthaltenen Zähler,
- eine im Master-Kommunikationsmodul (100) enthaltene Tabelle, wobei die Tabelle Indices von Zeitdauern aufweist, wobei jeder Zeitdauerindex einer Kennung eines Slave-Kommunikationsmoduls zugeordnet ist oder nicht,
- im Master-Kommunikationsmodul (100) enthaltene Einrichtungen zur Übertragung von Datenrahmen an das oder jedes Slave-Kommunikationsmodul in einer Vielzahl von Zeitdauern, wobei jeder Datenrahmen den Wert des Zählers aufweist,
- in dem oder jedem Slave-Kommunikationsmodul (120₁, 120_{N}) enthaltene Empfangseinrichtungen der Datenrahmen,
- in dem oder jedem Slave-Kommunikationsmodul (120₁, 120_{N}) enthaltene Einrichtungen zum Lesen des im empfangenen Datenrahmen enthaltenen Werts des Zählers, und zur Aktualisierung eines in dem oder jedem Slave-Kommunikationsmodul enthaltenen Zählers mit dem im empfangenen Datenrahmen enthaltenen gelesenen Wert des Zählers,
- in dem oder jedem Slave-Kommunikationsmodul (120₁, 120_{N}) enthaltene Überprüfungseinrichtungen, ob der aktualisierte Wert des Zählers einem dem Slave-Kommunikationsmodul zugeordneten Zeitdauerindex entspricht,
- in dem oder jedem Slave-Kommunikationsmodul (120₁, 120_{N}) enthaltene Transfereinrichtungen eines Datenrahmens an das Master-Kommunikationsmodul, wenn der gelesene und gespeicherte Wert des Zählers einem dem Slave-Kommunikationsmodul zugeordneten Zeitdauerindex entspricht,
- im Master-Kommunikationsmodul (100) enthaltene Auswahlmittel des Ports, der das Master-Kommunikationsmodul mit dem Slave-Kommunikationsmodul verbindet, dessen Kennung dem Zeitdauerindex zugeordnet ist, der dem Wert des Zählers entspricht,
- im Master-Kommunikationsmodul (100) enthaltene Empfangseinrichtungen des vom Slave-Kommunikationsmodul übertragenen Datenrahmens.

2. System nach Anspruch 1, **dadurch gekennzeichnet, dass** das Master-Kommunikationsmodul mit einer Vielzahl von Slave-Kommunikationsmodulen verbunden ist, wobei der Port und die bidirektionale Verbindung, die jedes Slave-Kommunikationsmodul mit dem Master-Kommunikationsmodul verbinden, sich von dem Port und der bidirektionalen Verbindung unterscheiden, die jedes andere Slave-Kommunikationsmodul mit dem Master-Kommunikationsmodul verbinden.

3. System nach Anspruch 1, **dadurch gekennzeichnet, dass** mindestens zwei Slave-Kommunikationsmodule mit dem Master-Kommunikationsmodul verbunden sind, und dass mindestens ein Slave-Kommunikationsmodul mit dem Master-Kommunikationsmodul über ein anderes Slave-Kommunikationsmodul und den Port und die bidirektionale Verbindung verbunden ist, die das andere Slave-Kommunikationsmodul mit dem Master-Kommunikationsmodul verbinden.

4. System nach Anspruch 3, **dadurch gekennzeichnet, dass** das andere Slave-Kommunikationsmodul Übertragungseinrichtungen des Datenrahmens an das mit ihm verbundene Slave-Kommunikationsmodul aufweist.

5. System nach einem der Ansprüche 1 bis 4, **dadurch gekennzeichnet, dass** das System außerdem ein Überwachungsmodul aufweist, das jeden vom Master-Kommunikationsmodul und von dem oder jedem Slave-Kommunikationsmodul übertragenen Datenrahmen speichert.

6. System nach Anspruch 5, **dadurch gekennzeichnet, dass** das Überwachungsmodul jeden Datenrahmen vom Master-Kommunikationsmodul empfängt.

7. System nach Anspruch 5, **dadurch gekennzeichnet, dass** das Überwachungsmodul vom Master-Kommunikationsmodul jeden Datenrahmen empfängt, der vom Master-Kommunikationsmodul an den oder die Slave-Kommunikationsmodule übertragen wird, und jeden Datenrahmen empfängt, der von jedem Slave-Kommunikationsmodul der Slave-Kommunikationsmodule übertragen wird.

8. System nach einem der Ansprüche 1 bis 7, **dadurch gekennzeichnet, dass** das Master-Kommunikationsmodul sich in zwei Teile gliedert, wobei jeder Teil einen sie miteinander verbindenden Port aufweist.

9. System nach Anspruch 8, **dadurch gekennzeichnet, dass** die zwei Teile an unterschiedlichen Stellen angeordnet und die Ports durch eine Verbindung verbunden sind.

10. Kommunikationsverfahren zur Steuerung und Kontrolle mindestens eines Peripheriegeräts in einem Luftfahrzeug, wobei das System ein Master-Kommunikationsmodul enthält, das mit dem oder jedem Slave-Kommunikationsmodul verbunden ist, das vom Master-Kommunikationsmodul entfernt ist oder nicht, wobei das oder jedes Slave-Kommunikationsmodul in der Nähe eines gesteuerten Peripheriegeräts angeordnet und mit einem Port des Master-Kommunikationsmoduls über eine bidirektionale Verbindung verbunden ist, **dadurch gekennzeichnet, dass** das Verfahren die folgenden Schritte aufweist:
- Senden, durch das Master-Kommunikationsmodul, von Datenrahmen an das oder jedes Slave-Kommunikationsmodul in einer Vielzahl von Zeitdauern, wobei jeder Datenrahmen den Wert eines im Master-Kommunikationsmodul enthaltenen Zählers aufweist,
- Empfang, durch das oder jedes Slave-Kommunikationsmodul, der Datenrahmen,
- Lesen, durch das oder jedes Slave-Kommunikationsmodul, des im empfangenen Datenrahmen enthaltenen Werts des Zählers, und Aktualisierung, durch das oder jedes Slave-Kommunikationsmodul, eines in dem oder jedem Slave-Kommunikationsmodul enthaltenen Zählers mit dem im empfangenen Datenrahmen enthaltenen gelesenen Wert des Zählers,
- Überprüfung, durch das oder jedes Slave-Kommunikationsmodul, ob der aktualisierte Wert des Zählers einem dem Slave-Kommunikationsmodul zugeordneten Zeitdauerindex entspricht,
- Transfer, durch das oder jedes Slave-Kommunikationsmodul, eines Datenrahmens an das Master-Kommunikationsmodul, wenn der gelesene und gespeicherte Wert des Zählers einem dem Slave-Kommunikationsmodul zugeordneten Zeitdauerindex entspricht,
- Auswahl, durch das Master-Kommunikationsmodul, ausgehend von einer im Master-Kommunikationsmodul enthaltenen Tabelle, die Zeitdauerindices aufweist, wobei jeder Zeitdauerindex einer Kennung eines Slave-Kommunikationsmoduls zugeordnet ist oder nicht, des Ports, der das Master-Kommunikationsmodul mit dem Slave-Kommunikationsmodul verbindet, dessen Kennung dem Zeitdauerindex zugeordnet ist, der dem Wert des Zählers entspricht.

## Claims

1. Communication system for controlling and monitoring at least one peripheral (140₁, 140_{N}) in an aircraft, the system including a master communication module (100) connected to at least one distinct slave communication module (120₁, 120_{N}), which is or is not remote from the master communication module, the or each slave communication module being positioned close to a controlled peripheral (140₁, 140_{N}) and being connected to a port of the master communication module by a bidirectional link, **characterized in that** the system comprises:
- a counter included in the master communication module (100),
- a table, included in the master communication module (100), the table comprising time period indices, each time period index being or not being associated with an identifier of a slave communication module,
- transmission means, included in the master communication module (100), for transmitting data frames to the or to each slave communication module in a plurality of time periods, each data frame comprising the value of the counter,
- reception means, included in the or each slave communication module (120₁, 120_{N}), for receiving the data frames,
- reading means included in the or each slave communication module (120₁, 120_{N}), for reading the value of the counter included in the received data frame and for updating a counter included in the or each slave communication module with the read value of the counter included in the received data frame,
- checking means, included in the or each slave communication module (120₁, 120_{N}), for checking whether the updated value of the counter corresponds to a time period index associated with the slave communication module,
- transfer means, included in the or each slave communication module (120₁, 120_{N}) , for transferring a data frame to the master communication module if the read and stored value of the counter corresponds to a time period index associated with the slave communication module,
- selection means, included in the master communication module (100), for selecting the port connecting the master communication module to the slave communication module the identifier of which is associated with the time period index which corresponds to the value of the counter,
- reception means, included in the master communication module (100), for receiving the data frame transmitted by the slave communication module.

2. System according to Claim 1, **characterized in that** the master communication module is connected to a plurality of slave communication modules, the port and the bidirectional link connecting each slave communication module to the master communication module being different from the port and from the bidirectional link connecting every other slave communication module to the master communication module.

3. System according to Claim 1, **characterized in that** at least two slave communication modules are connected to the master communication module and **in that** at least one slave communication module is connected to the master communication module via another slave communication module and the port and the bidirectional link connecting the other slave communication module to the master communication module.

4. System according to Claim 3, **characterized in that** the other slave communication module comprises transmission means for transmitting the data frame to the slave communication module which is connected thereto.

5. System according to any one of Claims 1 to 4, **characterized in that** the system furthermore comprises a supervision module which stores each data frame transmitted by the master communication module and by the or each slave communication module.

6. System according to Claim 5, **characterized in that** the supervision module receives each data frame from the master communication module.

7. System according to Claim 5, **characterized in that** the supervision module receives from the master communication module each data frame transmitted by the master communication module to the one or more slave communication modules and receives each data frame transmitted by each slave communication module of the slave communication modules.

8. System according to any one of Claims 1 to 7, **characterized in that** the master communication module is composed of two parts, each part comprising a port connecting them to each other.

9. System according to Claim 8, **characterized in that** the two parts are placed in different locations and the ports are connected by a link.

10. Communication method for controlling and monitoring at least one peripheral in an aircraft, the system including a master communication module connected to the or to each slave communication module which is or is not remote from the master communication module, the or each slave communication module being positioned close to a controlled peripheral and being connected to a port of the master communication module by a bidirectional link, **characterized in that** the method comprises the steps of:
- the master communication module transmitting data frames to the or to each slave communication module in a plurality of time periods, each data frame comprising the value of a counter included in the master communication module,
- the or each slave communication module receiving the data frames,
- the or each slave communication module reading the value of the counter included in the received data frame, and the or each slave communication module updating a counter included in the or each slave communication module with the read value of the counter included in the received data frame,
- the or each slave communication module checking whether the updated value of the counter corresponds to a time period index associated with the slave communication module,
- the or each slave communication module transferring a data frame to the master communication module if the read and stored value of the counter corresponds to a time period index associated with the slave communication module,
- the master communication module selecting, from a table included in the master communication module and comprising time period indices, each time period index being or not being associated with an identifier of a slave communication module, the port connecting the master communication module to the slave communication module the identifier of which is associated with the time period index which corresponds to the value of the counter.
